# EUROPÄISCHE PATENTSCHRIFT

(11) **EP 0 802 574 B1**
(45) Veröffentlichungstag und Bekanntmachung des Hinweises auf die Patenterteilung: **26.04.2000**
(21) Anmeldenummer: 97102945.9
(22) Anmeldetag: 22.02.1997
(51) Int. Cl.: H01M 4/50, H01M 4/62, H01M 6/06

(54) **Zusätze für Mangandioxidkathoden von alkalischen Primärzellen**
Additives for manganese dioxide cathodes of primary alkaline cells
Additifs pour cathodes en dioxyde de manganèse de cellules primaires alcalines

(30) Priorität: 20.04.1996 DE 19615845
(43) Veröffentlichungstag der Anmeldung: 22.10.1997
(73) Patentinhaber: VARTA Gerätebatterie GmbH, 30419 Hannover (DE)
(72) Erfinder: Jose, Horst-Udo, 73479 Ellwangen (DE); Klaus, Christoph, 73479 Ellwangen (DE); Puin, Wolfgang, Dr., 73460 Hüttlingen (DE)
(74) Vertreter: Kaiser, Dieter Ralf, Dipl.-Ing.

(56) Entgegenhaltungen:
- EP-A- 0 747 980
- EP-A- 0 747 982
- DE-A- 19 546 333
- US-A- 5 532 085

## Beschreibung

Die Erfindung betrifft alkalische Primärzellen mit einem Zinkgel als Anodenmaterial, einem wäßrigen alkalischen Elektrolyten, einem Separator und einer Mangandioxid enthaltenden Kathodenmasse.

Die in alkalischen Primärzellen eingesetzten Kathoden bestehen üblicherweise aus Mangandioxid, Graphit und einem Bindemittel.
Weiterhin können Elektrolyt, Tenside sowie weitere Zusätze enthalten sein.
Das Mangandioxid wird, insbesondere in der elektrochemisch abgeschiedenen Form (EMD) als aktives Kathodenmaterial eingesetzt.

Synthesegraphit hoher Reinheit oder auch expandierte Graphite, hergestellt aus Naturgraphiten, in Pulverform mit einer typischen Partikelgröße von z.B. 10 - 50 µm bei Synthesegraphiten und Partikelgröße von 1 - 20 µm bei expandierten Graphiten werden als elektrisch leitfähiges Material der Kathodenmasse zugesetzt. Graphit hat die Funktion, gleichmäßig in der Kathodenpreßelektrode verteilt als leitfähige skelettartige Matrix erster Ordnung den elektrischen Ladungstransport innerhalb der Kathode zu gewährleisten. Üblich ist ein Graphitgehalt von 7 bis 10 Gew.% im Falle des Einsatzes von Synthesegraphiten. Im Falle des Einsatzes von expandierten Graphiten kann unter Anwendung spezieller Mischtechniken der Graphitgehalt bis auf circa 5 Gew.% reduziert werden, wobei gleichzeitig eine Verbesserung der Entladecharakteristik der Kathode erreicht wird.

In vielen Fällen ist die Kathode aus in den Zellenbecher eingeschobenen Kathodenringen aufgebaut. Ein Bindemittel bewirkt die benötigte mechanische Stabilität dieser Kathodenpreßkörper. Moderne Fertigungsanlagen für alkalische Primärzellen laufen mit sehr hoher Geschwindigkeit. So kann z.B. eine Produktionsgeschwindigkeit von 1000 Zellen der Größe LR6 pro Minute erreicht werden. Diese sogenannten "High Speed Linien" stellen gewisse Mindestanforderungen an die mechanische Stabilität der Kathodenringe, die in Zuteilstrecken und Verweilzeittellern transportiert werden.
Ein Nachteil der meisten Bindemittel ist, daß diese Volumen benötigen, welches nicht für aktives Material zur Verfügung steht. Weiterhin sind viele Bindemittel hydrophob und erschweren die Elektrolytaufnahme der Kathode im Prozeß der Zellenherstellung. Dadurch ergeben sich negative Auswirkungen auf die Zellenperformance.
Typische Bindemittel sind Kunststoffpulver aus der Gruppe der Polyethylene (PE), Polypropylene (PP), Polyethylenterephthalate (PET), Polytetrafluorethylen (PTFE) Polyacrylate (PA), Polybutadiene (PB) und Block- oder Copolymere der vorgenannten Verbindungen. Auch die Einbringung von Bindemitteln in Form von wäßrigen Dispersionen ist bekannt (z.B. PTFE- oder PE-Dispersionen). Hierbei hat das zugefügte Wasser ebenfalls bindende Eigenschaften auf den Kathodenpreßkörper.

Die Kathodenmasse enthält weiterhin Zusätze von alkalischen Elektrolyten, vorzugsweise Kalilauge in 10 bis 55 %iger Konzentration. Es sind binäre Elektrolyte wie KOH/NaOH oder KOH/LiOH sowie temäre Elektrolyten wie KOH/NaOH/LiOH einsetzbar.
Der Elektrolyt soll die Poren der Kathode füllen, um eine lonenleitfähigkeit in der Kathode zu erreichen. Eine Reihe von positiven Eigenschaften werden so erreicht. So kann auf den Einsatz von Bindemitteln ganz oder teilweise verzichtet werden, da Laugen ebenfalls bindende Eigenschaften auf den Kathodenpreßkörper haben. Durch die Wahl der Elektrolytmenge kann eine optimale Porosität der Kathode eingestellt werden, was zu einer Minimierung des Diaphragmenwiderstandes des Kathodenpreßkörpers führt. Ein reduzierter Diaphragmenwiderstand wiederum verbessert die Performance der kompletten Zellen deutlich. Eine Kathode mit z.B. 6 Gew.% eines 50 %igen KOH-Elektrolyten verbessert die Entlade-Eigenschaften der damit hergestellten Zellen im Vergleich zu einer Kathode mit niedrigerem oder ohne Elektrolytgehalt. Außerdem kann durch eine hohe Konzentration des Elektrolyten der Übergangswiderstand Zellenbecher zum Kathodenring nach einer Lagerung deutlich reduziert werden.
Die Herstellung einer Kathode mit einem hohen Elektrolytgehalt in der Kathoden-masse hat jedoch prozeßtechnische Nachteile im Vergleich zu einer trockenen Kathodenmischung. Für die Herstellung der Kathodenpreßkörper werden üblicherweise sogenannte Rundläufer-Preßwerkzeuge eingesetzt. Diese Preßwerkzeuge bestehen in der Regel aus speziellen Stahllegierungen, die einen deutlich ansteigenden Verschleiß bei ansteigendem Elektrolytgehalt in der Kathodenrezeptur aufweisen.

Der Zusatz von Tensiden zur Kathodenmasse verbessert die Elektrolytaufnahme der Kathode. Der Tensid-Zusatz erfolgt üblicherweise in sehr niedrigen Konzentrationen von zum Beispiel 1-100 ppm bezogen auf das Kathodengewicht und kann sowohl homogen der Kathodenmischung zugesetzt werden, als auch in einem vorgeschalteten Schritt auf die Graphitkomponente aufgezogen werden, um die hydrophoben Eigenschaften des Graphits zu reduzieren.
Übliche oberflächenaktive Substanzen können flüssig oder fest sein und dem nichtionischen-, anionischen- oder kationische Typ angehören. So sind z.B. aliphatische Fluorverbindungen, aromatische und aliphatische Phosphonsäuren oder Polyethylenglykole geeignet.
Als Nachteil solcher Tenside kann jedoch gelegentlich beobachtet werden, daß diese aufgrund ihrer hohen Molekülmobilität zur Zinkelektrode als Gegenelektrode gelangen und dort bei bestimmten Entladearten (z.B. pulsförmige Entladungen) eine Depression der Spannungslage bewirken.

Als weitere Zusätze werden u. a. Titanverbindungen verwendet.
In der Patentschrift US 5,342,712 wird als Zusatz zur Kathode Anatas-TiO₂ vorgeschlagen. Der Zusatz von 0,1 bis 2 Gew.% der Titandioxid-Modifikation Anatas zur Kathodenmasse von alkalischen Primärzellen soll eine Erhöhung der Benutzungszeitdauer um 15% bei höheren Strömen (3,9 Ohm-Entladung) gestatten.

Wünschenswert bleibt jedoch weiterhin eine Trockenkomponenten-Kathode, d.h. ohne oder mit reduziertem Elektrolytzusatz, welche jedoch in der assemblierten Zelle die Vorteile einer Feuchtmassen-Kathode aufweist. Weiterhin wird eine Verlängerung der Einsatzdauer von Rundläufer-Werkzeugen zur Kathodenherstellung, die zu einer Kostenersparnis im Produktionsprozeß führt, angestrebt.
Aufgabe der Erfindung ist es, eine Lösung für die vorgenannten Probleme anzugeben.

Erfindungsgemäß wird die Aufgabe dadurch gelöst, daß die Kathodenmasse von alkalischen Primärzellen 0,1 - 5 Gew.% Lithiumtitanat (Li₂TiO₃) enthält.
Der Zusatz von Lithiumtitanat (Li₂TiO₃) zur Kathodenmasse verbessert das Entladeverhalten der Batterie und verringert die Gasung in der Zelle.
Das Verfahren zur Herstellung erfindungsgemäßen alkalischer Primärzellen ist dadurch gekennzeichnet, daß Lithiumtitanat (Li₂TiO₃) pulverförmig der Kathodenmasse mit einem Elektrolytgehalt von 4 bis 5 Gew.% zugesetzt wird.
Vorzugsweise wird Lithiumtitanat (Li₂TiO₃) mit einer Partikelgröße von 0,1 µm bis 200 µm und einer BET-Oberfläche von 0,5 - 500 m²/g der Kathodenmasse zugesetzt. Lithiumtitanat (Li₂TiO₃) wird vorzugsweise der Kathodenmasse in einer Reinheit von größer 95% zugesetzt.

Die vorliegende Erfindung wird anhand des folgenden Beispiels beschrieben.

### Beispiel

Zu Kathodenmischungen, bestehend aus den Komponenten:
86.0 % EMD
9.0 % Graphit
4.5 % Elektrolyt (50%ige KOH) wird 0,5 Gew.%
Li₂Ti0₃ Lithiumtitanat. zugemischt.

Zu Vergleichszwecken werden eine Zelle (Referenzzelle) ohne Titanatzusatz und eine Zelle mit 0,5 Gew.% Anatas-TiO₂ in der Kathodenmasse hergestellt.
Die Mischungen werden granuliert und anschließend zu ringförmigen Preßkörpern verdichtet. Diese werden in den Zellbecher eingestoßen und nachfolgend der Separator eingefügt, entweder in Form eines Kreuzwickels oder in Form eines Konvolutseparators. Anschließend wird die gelförmige Zinkelektrode zudosiert. Die Zinkanode besteht aus 68 Gew.% eines Zinkpulvers mit einer Kornverteilung von typischerweise 50 - 500 µm Partikelgröße und circa 32 Gew.% eines alkalischen Elektrolyten (z.B. eine 40%ige KOH). Weiterhin werden dieser Anode geringe Mengen eines Gasungsinhibitors (z.B. In₂0₃ oder In(OH)₃), eines Geliermittels (z.B. Carbopol 940) einer oberflächenaktiven Substanz (z.B. Glycol, Polyethylenglycol oder ein Fluortensid) zugesetzt.

Tabelle 1 zeigt die Versuchsergebnisse mit verschiedenen Titanverbindungen bezüglich Performance und Gasung. Es wird deutlich, daß Li₂Ti0₃ neben Verbesserung der kontinuierlichen und intermittierenden Entladeeigenschaften auch die Gasung der Zelle reduziert.

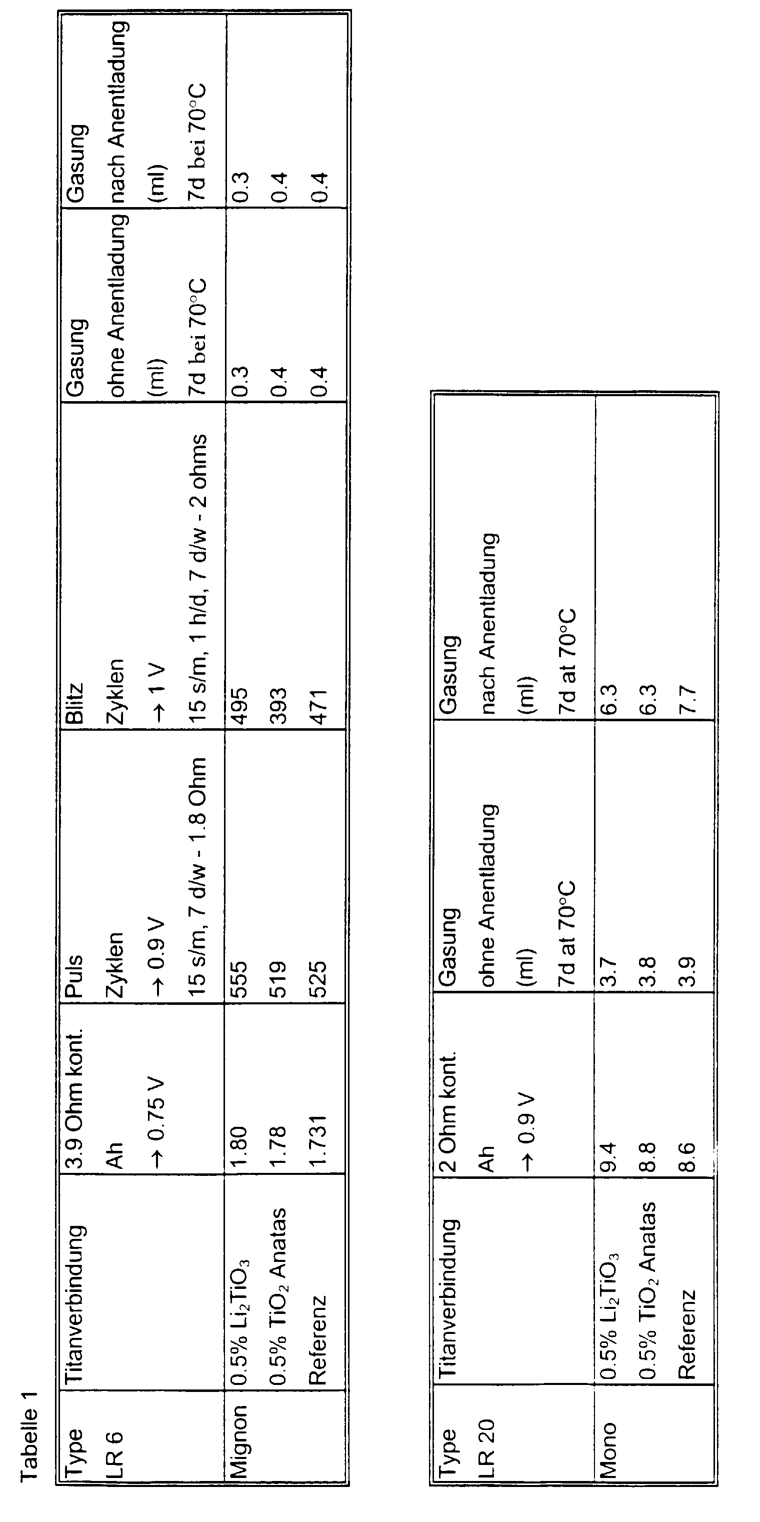

## Patentansprüche

1. Alkalische Primärzelle mit einem Zinkgel als Anodenmaterial, einem wäßrigen alkalischen Elektrolyten, einem Separator und einer Mangandioxid enthaltenden Kathodenmasse, dadurch gekennzeichnet, daß die Kathodenmasse 0,1 - 5 Gew.% Lithiumtitanat (Li₂TiO₃) enthält.

2. Alkalische Primärzelle nach einem der Ansprüche 1 oder 2, dadurch gekennzeichnet, daß Lithiumtitanat (Li₂TiO₃) pulverförmig der Kathodenmasse mit einem Elektrolytgehalt von 4 bis 5 Gew.% zugesetzt ist.

3. Alkalische Primärzelle nach Anspruch 3, dadurch gekennzeichnet, daß Lithiumtitanat (Li₂TiO₃) mit einer Partikelgröße von 0,1 µm bis 200 µm und einer BET-Oberfläche von 0,5 - 500 m²/g der Kathodenmasse zugesetzt ist.

4. Alkalische Primärzelle nach einem der Ansprüche 3 oder 4, dadurch gekennzeichnet, daß das zugesetzte Lithiumtitanat (Li₂TiO₃) eine Reinheit von größer 95% besitzt.

## Claims

1. Alkaline primary cell comprising a zinc gel as the anode material, an aqueous alkaline electrolyte, a separator and a cathode material containing manganese dioxide, characterized in that the cathode material contains 0.1-5% by weight of lithium titanate (Li₂TiO₃).

2. Alkaline primary cell according to either Claim 1 or 2, characterized in that lithium titanate (Li₂TiO₃) is added in the form of a powder to the cathode material having an electrolyte content of from 4 to 5% by weight.

3. Alkaline primary cell according to Claim 3, characterized in that lithium titanate (Li₂TiO₃) having a particle size of from 0.1 µm to 200 µm and a BET surface area of 0.5-500 m²/g is added to the cathode material.

4. Alkaline primary cell according to Claim 3 or 4, characterized in that the lithium titanate (Li₂TiO₃) added has a purity of more than 95%.

## Revendications

1. Cellule primaire alcaline comprenant un gel de zinc comme matière de l'anode, un électrolyte aqueux alcalin, un séparateur et une masse de cathode contenant du dioxyde de titane,
caractérisée en ce que
la masse de la cathode contient 0,1 à 5 % en poids de titanate de lithium (Li₂TiO₃).

2. Cellule primaire alcaline selon l'une des revendications 1 ou 2,
caractérisée en ce que
le titanate de lithium (Li₂TiO₃) est ajouté sous forme pulvérulente à la masse de la cathode avec une teneur en électrolyte de 4 à 5 % en poids.

3. Cellule primaire alcaline selon la revendication 3,
caractérisée en ce que
le titanate de lithium (Li₂TiO₃) est ajouté avec une taille de particules de 0,1 µm à 200 µm et une surface BET de 0,5 à 500 m²/g de masse de cathode.

4. Cellule primaire alcaline selon l'une des revendications 3 ou 4,
caractérisée en ce que
le titanate de lithium (Li₂TiO₃) ajouté possède une pureté supérieure à 95 %.
